**Europäisches Patentamt**

**European Patent Office**

**Office européen des brevets**

(19)

(11) Veröffentlichungsnummer: **0 054 684**
**B1**

(12)

# EUROPÄISCHE PATENTSCHRIFT

(45) Veröffentlichungstag der Patentschrift:
**14.03.84**

(51) Int. Cl.³: **C 09 D 11/02**

(21) Anmeldenummer: **81108885.5**

(22) Anmeldetag: **24.10.81**

(54) **Verfahren zur Verringerung der Abrasion durch Pigmente und Druckfarben und im Abrasionsverhalten verbesserte Pigmente und Druckfarben.**

(30) Priorität: **19.12.80 DE 3047999**

(43) Veröffentlichungstag der Anmeldung:
**30.06.82 Patentblatt 82/26**

(45) Bekanntmachung des Hinweises auf die Patenterteilung:
**14.03.84 Patentblatt 84/11**

(84) Benannte Vertragsstaaten:
**AT BE CH DE FR GB IT LI NL SE**

(56) Entgegenhaltungen:
**AT - A - 358 604**
**DE - B - 2 538 097**
**FR - A - 1 245 972**
**US - A - 4 097 301**

(73) Patentinhaber: **BASF Aktiengesellschaft,
Carl-Bosch-Strasse 38, D-6700 Ludwigshafen (DE)**

(72) Erfinder: **Jettmar, Werner, Dr., Damaschkering 60,
D-6800 Mannheim (DE)**
Erfinder: **Olschner, Hans, Multring 17, D-6940 Weinheim
(DE)**
Erfinder: **Junge, Helmut, Dr., Am Boehlig 1,
D-6706 Wachenheim (DE)**

**0 054 684**

### Verfahren zur Verringerung der Abrasion durch Pigmente und Druckfarben und im Abrasionsverhalten verbesserte Pigmente und Druckfarben

Die Erfindung betrifft ein Verfahren zur Verringerung der Abrasion durch Pigmente und Druckfarben an Druckzylindern sowie im Abrasionsverhalten verbesserte Pigmente und Druckfarben.

Der Verschleiß von Druckzylindern ist ein Problem, mit dem der Tiefdruck mehr oder weniger konfrontiert wird. In dem Maße wie die Umdrehungsgeschwindigkeiten der Tiefdruckmaschinen und die Druckauflagenhöhen zunahmen, trat dieses Problem mehr und mehr in den Vordergrund.

Chromzerstörung und Chromverschleiß an Tiefdruckzylindern bedeutet eine vorzeitige Abnützung oder gar Zerstörung der schützenden Chromschicht von Tiefdruckzylindern vor Beendigung eines Druckauftrages; dies kann zu beträchtlichen Störungen und Ausfällen in der Praxis führen und beträchtliche Einbußen mit sich bringen.

Nach Scheidt (zitiert in Aust: »Chromverschleiß auf Tiefdruckzylindern« in »Chromzerstörung, Chromverschleiß«, Bundesverband Druck E.V., Abteilung Technik + Forschung, Fachbereich Tiefdruck, 1979, Seite 7) ist die Chromzerstörung der Druckzylinder einer Summe von Fehlern zuzurechnen, deren Faktoren das Verschleißverhalten gleichzeitig beeinflussen. Schwerpunkte dieser Einflußgrößen sind die Druckfarbe, die Druckform und die Druckmaschine.

Nach Aust (Chromverschleiß auf Tiefdruckzylindern) in »Chromzerstörung, Chromverschleiß«, Bundesverband Druck E.V., Abteilung Technik + Forschung, Fachbereich Tiefdruck, 1979, Seiten 7 und 26 ff.) beeinflussen in erster Linie die Pigmente die Abrasion; die Druckfarbe ist somit der wesentliche Faktor des Chromverschleißes. Des weiteren spielen die Korngröße und die Kornverteilung der Pigmente eine entsprechende Rolle. Ebenfalls bestimmen Herstellungsmethode und Gesamtzusammensetzung einer Druckfarbe deren Verschleißeigenschaften.

Nach Stammen (»Beitrag zum Thema Chromverschleiß/Chromzerstörung aus der Sicht der Tiefdruckfarbenhersteller« in »Chromzerstörung, Chromverschleiß«, Bundesverband Druck E.V., Abteilung Technik + Forschung, Fachbreich Tiefdruck, 1979, Seite 29 ff.) ist die Härte der Pigmente und Füllkörper, die weitgehend von der Kristallstruktur abhängig ist, Ursache für das abrasive Verhalten einer Druckfarbe. Solche Farben haben nach Stammen eine echte Schmirgelwirkung und »führen sellbstverständlich zu einer vorzeitigen Abnutzung des Chroms, auch dann, wenn alle übrigen, den Verschleiß beeinflussenden Faktoren optimal eingestellt worden sind«.

Aufgabe der vorliegenden Erfindung war es, ein Verfahren und Mittel aufzufinden, mit denen die Abrasion durch Druckfarben und Pigmente verhindert oder wenigstens deutlich verringert werden kann.

Es wurde nun überraschend gefunden, daß die Abrasion durch Pigmente und Druckfarben verringert bis praktisch verhindert wird, wenn man den Pigmenten oder Druckfarben in Druckfarben unlösliche Substanzen mit einer Mohs'schen Härte von ungefähr 4,5 bis 8 und einer Teilchengröße von unterhalb 55 μm zusetzt.

Dies war um so überraschender und keineswegs vorherzusehen, da viele der geeigneten Mittel als Schleif- und Poliermittel für Glas und Metalle bekannt sind.

Als in Druckfarben unlösliche Substanzen, die eine Mohs'sche Härte von ungefähr 4,5 bis 8 aufweisen, kommen z. B. in Betracht: Eisenpulver, Verbindungen des Eisens, des Zirkons, des Siliciums, des Magnesiums, Silikate des Aluminiums, Oxide des Mangans, Zinns und Cers oder Gemische solcher Verbindungen.

Geeignete Substanzen sind z. B. Eisenpulver, insbesondere Carbonyleisenpulver, Eisensilikate, Zirkonsilikate, Aluminiumsulikate und gemischte Silikate dieser Metalle, Alkalimetall- oder Erdalkalimetall-Tonerde-Silikate, Erdalkalimetallsilikate, hydratisierte Alkalimetall/Erdalkalimetall-Tonerde-Silikate, Siliciumdioxid, Ceroxid, Zinnoxid, Mangandioxid, Eisenoxide oder Gemische dieser Substanzen.

Als Verbindungen des Eisens und Zirkons kommen im einzelnen z. B. in Betracht: $Fe_2O_3$, das durch Verbrennen von Eisenpentacarbonyl erhaltene Eisenoxid, Eisensilikate, Zirkonsilikate und insbesondere Zirkonoxide verschiedener Herkunft.

Als Alkalimetall-/Erdalkalimetall-Tonerde-Silikate sind z. B. die Spate wie Kali-, Natron- und Kalkfeldspat und als Erdalkalimetallsilikate z. B. Forsterit und Steatit zu nennen. Als hydratisiertes Alkalimetall-/Erdalkalimetall-Tonerde-Silikat ist z. B. Bimsstein zu nennen.

Siliciumdioxid kommt z. B. in Form von Flint oder Cristobalit in Betracht.

Als besonders wirksam haben sich erwiesen: durch Verbrennen von Eisenpentacarbonyl erhaltenes Eisenoxid, Eisenpulver, das aus Eisenpentacarbonyl erhalten wird (Carbonyleisenpulver), Zirkonsilikate, Zirkonoxide, Verbindungen unterschiedlicher Zusammensetzung aus Zirkonoxid und Siliciumdioxid, Siliciumdioxid, Bimsstein, Feldspat, Steatit und Flint, sowie Gemische davon.

Ganz besonders wirksam sind Bimsstein, Feldspat, Carbonyleisenpulver und Zirkonoxide, die durch Aufbereiten des natürlich vorkommenden Baddeleyit oder durch Aufschluß von Zirkon enthaltenden Mineralien wir Zirkon, Malakon, Baddeleyit, Zirkit, Endialyt oder Gemischen davon erhalten werden. Von diesen Mitteln ist das aus Baddeleyit erhaltene Zirkonoxid ganz besonders hervorzuheben.

Die erfindungsgemäß zu verwendenden Substanzen werden in feinteiliger Form angewendet. Die Teilchengröße liegt unterhalb von 55 μm, vorzugsweise zwischen 0,1 und 20 μm. Gegebenenfalls kann

2

durch einfache Versuche ermittelt werden, welcher Teichengrößenbereich bei dem zu verbessernden Pigment bzw. bei der zu verbessernden Druckfarbe die beste Wirkung zeigt.

So konnte z. B. bei Anwendung von Zirkonoxid, das aus natürlich vorkommendem Baddeleyit erhalten worden ist, nur ein unwesentlicher Unterschied in der Wirkung bei Teilchengrößen von bis zu 5 μm, von 5 bis 20 μm und von 20 bis 53 μm festgestellt werden.

Die Menge an diesen unlöslichen Substanzen richtet sich nach dem Abrasionsverhalten der Pigmente in der Druckfarbe bzw. der Druckfarbe. Bei stärkerer Abrasion wird man mehr an diesen Substanzen zugeben als bei geringer Abrasion.

Die Mengen an den unlöslichen Substanzen betragen im allgemeinen etwa 0,01 bis 10, vorzugsweise 0,05 bis 5 Gew.-%, insbesondere 0,1 bis 4 Gew.-%, bezogen auf Pigment.

Der für ein gegebenes Pigment oder für die Druckfarbe erforderliche Zusatz an den unlöslichen Substanzen kann im Abriebtester (s. Aust., 1.c.) bestimmt werden. Mit Hilfe dieses Gerätes kann leicht festgestellt werden, ob die für die Verminderung der Abrasion vorgesehenen Substanzen für das zu verbessernde Pigment oder die zu verbessernde Druckfarbe geeignet sind und eine ausreichende Wirkung zeigen.

Die die Abrasion vermindernden oder verhindernden Substanzen können dem Pigment oder der fertigen Druckfarbe zugemischt oder auch bei der Herstellung der Druckfarbe zugegeben werden.

Bei Pigmenten können die wirksamen Substanzen auch bei der Konfektionierung, z. B. beim Mahlen oder Mischen der Pigmente oder zusammen mit Füllstoffen zugegeben werden.

Die erfindungsgemäß zu verwendenden unlöslichen Substanzen können auch beim Finish der Pigmente oder sogar während der Synthese des Rohpigments zugegeben werden, sofern nicht Medien verwendet werden, in denen die die Abrasion verhindernden Substanzen löslich sind oder chemisch verändert werden.

Vorteilhafterweise werden die erfindungsgemäß zu verwendenden Substanzen den fertigen Pigmenten vor der Endmahlung zugesetzt oder bei der Herstellung der Druckfarben, zusammen mit dem Pigment in die Bindemittellösung eingearbeitet.

Die die Abrasion verhindernden Substanzen können in Form von Pulvern oder auch in Form von flüssigen oder pastenförmigen Zubereitungen, die Lösungsmittel und ggf. Druckfarbenbindemittel und/oder andere in Tiefdruckfarben übliche Hilfsmittel enthalten, angewendet werden.

In Tiefdruckfarben übliche Mittel sind z. B. Netzmittel, Gleitmittel, Mittel, die das Absetzen von Festkörpern verhindern, Mittel zur Änderung der Viskosität, der Reibfestigkeit oder des Oberflächenglanzes.

Bei den Versuchen wurde außerdem gefunden, daß in Gegenwart von Substanzen mit einer Mohs'schen Härte <4,5 die Menge an den erfindungsgemäß zu verwendenden Substanzen mit Mohs'schen Härten von 4,5 bis 8 erniedrigt werden kann, da in diesen Fällen eine synergistische Wechselwirkung zwischen beiden Substanzen auftritt. So wurde z. B. in einer Druckfarbe, die bei der Prüfung im Abriebtestgerät AT II einen maximalen Abrieb von 4 μm (Meßpunkt 2) lieferte, durch Zusatz von 3 Gew.-% Bentonite ($Al_2(OH)_2Si_4O_{10}$; Mohs'sche Härte 1) die Abrasion nur unwesentlich auf 3,8 μm Abrieb vermindert. Durch die Zugabe von 0,25 Gew.-% eines Zirkonoxids (99% $ZrO_2$, monoklin; ® Tego BC 99 S der Fa. T. H. Goldschmidt AG; Mohs'sche Härte 6,5) zu der gleichen Druckfarbe wurde die Abrasion auf 0,81 μm Abrieb verringert. Gibt man dieser Druckfarbe 3% Bentonite zu, so daß eine Farbe mit 3 Gew.-% Bentonite und 0,25 Gew.-% des vorstehend genannten Zirkonoxids vorliegt, dann wurde der maximale Abrieb auf 0,08 μm verringert.

Als Pigmente kommen die für Druckfarben, insbesondere für Tiefdruckfarben üblicherweise verwendeten anorganischen und organischen Pigmente in Betracht.

Als organische Pigmente kommen z. B. metallfreie Phthalocyanine, Kupferphthalocyanine, Polychlorkupferphthalocyanine, Polychlorbromkupferphthalocyanine, Azopigmente, insbesondere β-Kupferphthalocyaninpigmente in Betracht.

Als anorganische Pigmente sind z. B. Ruß, Eisenoxide, Zinksulfid, Titandioxid (Anatas), Bleichromate und Bleimolybdate zu nennen.

Nach dem erfindungsgemäßen Verfahren, bzw. durch die erfindungsgemäß zuzugebenden Substanzen können jedoch nur solche Druckfarben und Pigmente im Abrasionsverhalten verbessert werden, bei denen die Abrasion durch Teilchen erfolgt, die nicht wesentlich härter sind als die Chromschicht der Druckplatte. So kann z. B. die durch Aluminiumoxid in Form von Korund oder Stoffe mit ähnlicher oder größerer Härte verursachte massive Abrasion durch Zugeben der erfindungsgemäßen Substanzen nicht oder nicht wesentlich beeinflußt werden.

Aus DE-2-2 538 097 sind Druckfarben bekannt, die z. B. Aluminiumsilikat oder Siliziumdioxid als inerte Extender enthalten. Eine Verringerung der Abrasion durch Pigmente und Druckfarben durch solche Zusätze ist aber in dieser Veröffentlichung nicht beschrieben.

Die folgenden Ausführungsbeispiele sollen die Erfindung weiter erläutern. Die im folgenden angegebenen Teile und Prozentangaben beziehen sich auf das Gewicht. Handelsnamen, die eingetragene Warenzeichen sind, wurden durch ® gekennzeichnet.

**0 054 684**

## A. Bestimmung der Abrasion der Druckfarbe bzw. des Pigments in der Druckfarbe

Das Abrasionsverhalten von Pigmenten und Druckfarben wurde an Druckfarben mit dem Abrieb-Tester AT II, der von der Firma Burda, Offenburg, entwickelt worden ist und der von der Fa. Schröder, Weinheim, hergestellt und vertrieben wird, bestimmt.

### A1) Herstellung der Prüfdruckfarbe

1.1 In einem verschließbaren Glas- oder Polyethylengefäß werden 270 g einer 35%igen Lösung eines kolophonium-modifizierten Phenolharzes in Toluol, 36 g des zu prüfenden Pigments und 300 g Stahlkugeln (3 mm $\varnothing$) eingewogen und das Pigment 30 Min. auf einer Vibrationsmühle dispergiert.
Zum Dispergieren können auch Rührwerksmühlen, Rollmühlen, Schnellrührer oder ähnliche Geräte verwendet werden, mit denen die erforderliche Feinverteilung des Pigments in der Druckfarbe erzielt wird.
1.2 Nach dem Dispergieren werden 230 g des Farbkonzentrates mit der gleichen Gewichtsmenge einer 35%igen Toluollösung des gleichen oder eines anderen mit dem Farbkonzentrat verträglichen natürlichen oder synthetischen Harzes (z. B. einem Kohlenwasserstoffharz) verdünnt. Anschließend wird die Druckfarbe mit Lösungsmittel auf eine Viskosität von 28 sec (DIN-Becher, 3 mm Düse) eingestellt.
1.3 Zum Verdünnen kann auch eine 35gew.-%ige Zink- oder Calciumresinatlösung in einem Toluol/Benzingemisch verwendet werden.

### A2) Abrasionsprüfung

Zur Abrasionsprüfung werden 450 g Druckfarbe in einem Abriebtester AT II (Fa. Schröder Meßtechnik, Weinheim) bei einem Rakelanpreßdruck von 300 p/cm ( $\hat{=}$ $\approx$50 kp/cm$^2$) 2.10$^6$ Rakelkontakten (= 5.10$^5$ Umdrehungen mit je 4 MDC-Rakelmesser) ausgesetzt. Die Temperatur der Druckfarbe wird mit Hilfe eines Thermostaten bei 20°C gehalten. Als Rakel wurden MDC-Stufenfacettenrakeln verwendet. Anschließend wird die Änderung der $\approx$6 µm dicken Chromschicht in der empfindlichsten Rasterzone (Rastertiefe $\approx$20 µm; Meßpunkt 2) mit dem Couloscop S 8 der Fa. Fischer, Sindelfingen, gemessen und als maximaler Abrieb in µm angegeben. Die Genauigkeit der nach M. Aust (Druckwelt 1978, Heft 9, Seite 466) korrigierten Meßwerte bei 20 µm Ätztiefe (Rastertiefe) liegt bei 0,3 µm, was mit den Angaben aus der Literatur übereinstimmt (Aust und Braschoss, »Der Polygraph«, 21–80, Seite 1885).

Dementsprechend werden Druckfarben mit einem maximalen Abrieb von $\leq$0,3 µm als gut bezeichnet. Druckfarben mit einem Abrieb von >0,3 µm bis zu 0,6 µm werden als ausreichend und solche mit einem Abrieb von >0,6 µm als für höhere Auflagen bedenklich eingestuft.

### B. Beispiele

### Beispiel 1

a) 100 Teile eines für Tiefdruckfarben geeigneten $\beta$-Kupferphthalocyaninpigments und 3 Teile eines Zirkonoxides (90% ZrO$_2$; 8% SiO$_2$; Härte nach Mohs: 6,5; monoklin, Teilchengröße $\approx$4 µm; ® Zedox T der Fa. Anzon Ltd.) werden auf einem Rollbrett trocken gemischt (Dauer: 1 h).
b) Mit der erhaltenen Mischung wurde nach A 1.1) und A 1.2) eine Tiefdruckfarbe hergestellt (b1). Zum Vergleich wurde außerdem eine Tiefdruckfarbe mit dem bei a) verwendeten $\beta$-Kupferphthalocyanin hergestellt (b2).
Beide Druckfarben wurden nach A2) auf Abrieb geprüft.
Abrieb    Druckfarbe b2): 2,4 µm     Zusatz: 0%
          Druckfarbe b1): 0,1 µm     Zusatz: 3%.

### Beispiele 2 bis 17

a) Das in Beispiel 1a) angegebene $\beta$-Kupferphthalocyaninpigment wird nach dem dort angegebenen Verfahren mit den in der folgenden Tabelle I angegebenen Substanzen in der in Spalte 5 angegebenen Menge trocken gemischt.
b) Mit den erhaltenen Mischungen wurden nach A 1.1) und A 1.2) Toluoltiefdruckfarben hergestellt und an diesen der Abrieb nach A2) bestimmt. Der gemessene maximale Abrieb ist in Spalte 6 der Tabelle I angegeben.

4

**0 054 684**

### Beispiel 18

#### Zusätze bei der Synthese des Rohpigments

18.1 Kupferphthalocyanin wurde nach Ullmanns Encyklopädie der technischen Chemie, 4., neubearbeitete und erweiterte Auflage 1979, Band 18, Seiten 509/510, aus Phthalsäureanhydrid, Kupfer-II-chlorid, Harnstoff in Trichlorbenzol unter Zusatz von 2,6 Gew.-%, bezogen auf eingesetztes Phthalsäureanhydrid, Zirkonoxid (99,9% $ZrO_2$; monoklin; Korngröße: <53 μm; ® Tego BC 99S der Fa. Th. Goldschmidt AG) hergestellt und das Verfahrensprodukt in üblicher Weise aufgearbeitet.

Das rohe Kupferphthalocyanin wurde nach Ullmann (l.c., S. 512, linke Spalte, Absatz 2 von unten) in eine Pigmentform überführt. Die mit diesem Pigment nach A 1.1) und A 1.2) hergestellte Druckfarbe wurde nach A2) auf Abrieb geprüft.

Abrieb: 0,2±0,1 μm

Vergleich: 0,6±0,3 μm (ohne Zusatz).

Tabelle I

| Beisp. | Zusatz | Härte | Größe [μm] | Menge [%] | Max. Abrieb [μm] |
|---|---|---|---|---|---|
| Ver-gleich | 0 | — | — | — | 2,4 |
| 2 | Magnesiumoxid (MgO) | 5,5 | <3 | 1,75 | 1,6 |
| 3 | Eisen-II/III-oxid ($Fe_3O_4$ | 5—7 | <1 | 3,0 | 1,5 |
| 4 | Zirkonoxid (95% $ZrO_2$; kubisch + monoklin; ®Zircoa C der Corning Glas Works) | 6—7 | 3 | 2,0 | 1,15 |
| 5 | Zinnoxid ($SnO_2$) | 6 | <2 | 1,75 | 1,0 |
| 6 | Ceroxid (®Opaline der Rhone-Poulenc) | 7 | <1 | 2,0 | 1,0 |
| 7 | Zirkonoxid (92% $ZrO_2$; 0,6% $SiO_2$, kubisch; ®Zircoa B der Corning Glas Works) | 6—7 | 3 | 1,8 | 0,9 |
| 8 | Polierrot ($Fe_2O_3$; Eisen-III-oxid) | 5—6 | <1 | 2,5 | 0,76 |
| 9 | Zirkonsilikat ($ZrSiO_4$; ®Zircosil 15 der Anzon Ltd.) | 7—8 | <3 | 3,0 | 0,58 |
| 10 | Flint ($SiO_2$) | 7 | <3 | 1,0 | 0,48 |
| 11 | Feldspat (K $AlSi_3O_8$) | 6—7 | <5 | 3,0 · | 0,44 |
| 12 | Steatit (Mg $SiO_3$) | 7—8 | <5 | 2,0 | 0,36 |
| 13 | Zirkonoxid ($ZrO_2$ 97%; kubisch/monoklin) | 6—7 | 4—7 | 1,5 | 0,22 |
| 14 | Bimsstein | 6—7 | 5—25 | 5,0 | 0,18 |
| 15 | Zirkonoxid ($ZrO_2$ 90%; $SiO_2$ 9%; monoklin; ®Zedox HC der Anzon Ltd.) | 6—7 | 20 | 1,5 | 0,12 |
| 16 | Zirkonoxid ($ZrO_2$ 99%; monoklin, ®Tego BC 99S der Fa. Th. Goldschmidt AG) | 6—7 | 53 | 0,75 | 0,03 |
| 17 | Carbonyleisen (Fe, enth. 0,8% C, 0,8% N) | 7—8 | 3—5 | 3,0 | 0,01 |

18.2 Kupferphthalocyanin wurde nach der DE-PS 1 569 636, Beispiel 1 aus o-Phthalodinitril und Kupfer-I-chlorid in Nitrobenzol unter Zusatz von 2,6%, bezogen auf o-Phthalodinitril, Zirkonoxid (90% ZrO$_2$; 9% SiO$_2$; monoklin; Teilchengröße <20 μm; ® Zedox HC der Firma Anzon Ltd.) unter gutem Durchmischen hergestellt. Das Rohpigment wurde wie unter Beispiel 18.1 angegeben in die Pigmentform überführt.

Bei der mit diesem Pigment hergestellten Tiefdruckfarbe wurde bei der Prüfung nach A2) ein Abrieb von 0,2 ± 0,1 μm gemessen.

## Beispiel 19

Rohes Polychlorkupferphthalocyanin (48,6% Cl) wurde in 95%iger Schwefelsäure bei 35 bis 40° C 20 h gequollen und das Gemisch in die 7fache Menge Wasser ausgetragen. Unter gutem Rühren wurden der Suspension 3%, bezogen auf Polychlorkupferphthalocyanin, Zirkonoxid (99,2% ZrO$_2$; monoklin, Teilchengröße ≈3 μm; ® Zircoa A der Corning Glas Works) zugegeben. Das Pigment wurde in üblicher Weise isoliert. Man erhält ein praktisch nicht abrasives Grünpigment.

Bei der Prüfung der nach A 1.1) und A 1.2) hergestellten Druckfarbe nach A2) wurde ein Abtrag von 0,2 μm gemessen. Die Tiefdruckfarbe mit dem Vergleichspigment (ohne Zirkonoxid) ergab einen Abtrag von 1,2 μm.

Entsprechende Ergebnisse wurden erzielt, wenn das Pigment durch Quellen von chlorfreiem oder anchloriertem Kupferphthalocyanin oder von teilbromiertem Kupferphthalocyanin in 65- bis 85%iger Schwefelsäure und Austragen der Quellung auf Wasser hergestellt wurde und 1 bis 3%, bezogen auf Pigment, des obengenannten Zirkonoxids zu der verdünnten schwefelsauren Suspension gegeben wurde.

## Beispiel 20

In einem Kneter wurde eine Mischung aus 100 Teilen rohem Kupferphthalocyanin, 2,5 Teile Zirkonoxid (99,5% ZrO$_2$; monoklin; Teilchengröße <53 μm; ® Tego BC 99S der Firma Th. Goldschmidt AG), 400 Teilen Natriumchlorid und 50 Teilen Polyäthylenglykol 2 h geknetet. Der Knetansatz wird in üblicher Weise in Wasser zerlegt und aus der warmen Pigmentsuspension das Pigment isoliert und getrocknet. Das Pigment wurde nach A 1.1) und A 1.2) zu einer Tiefdruckfarbe verarbeitet und nach A2) die Abrasion bestimmt. Abrasion: 0,05 μm; Vergleich (d. h. ohne Zusatz von Zirkonoxid): 1,1 μm Abtrag.

## Beispiel 21

100 Teile abrasiv wirkendes Kupferphthalocyaninpigment (β-Modifikation) und 3 Teile gemahlener Bimsstein (Teilchengröße <53 μm) wurden nach den Angaben der DE-AS 1 161 533, Beispiel 2, trocken gemahlen und das Mahlgut aufgearbeitet.

Die mit dem so erhaltenen Pigment hergestellte Tiefdruckfarbe zeigt nach A2) einen Abtrag von 0,15 μm. Das Vergleichspigment, das in Abwesenheit von Bimsstein gemahlen wurde, wies in der Druckfarbe einen Abrieb von 1,0 μm auf.

Ein gleich gutes Ergebnis wurde erhalten, wenn das Gemisch aus Rohpigment und Bimsstein in Gegenwart von Natriumchlorid, von bindemittelverträglichen Mahlhilfsmitteln und/oder Pigmentadditiven in der Kugelmühle trocken gemahlen und die Mahlhilfsmittel gegebenenfalls entfernt wurden. Auch nach Durchführen eines Lösungsmittelfinishs wurden Kupferphthalocyaninpigmente der β-Modifikation erhalten, welche einen Abtrag von ca. 0,15 μm zeigen.

## Beispiel 22

a) 100 Teile rohes abrasiv wirkendes Kupferphthalocyanin und 2 Teile Zirkonoxid (99,0% ZrO$_2$, monoklin, Teilchengröße <20 μm; »Zirkonoxid S Grade« der Magnesium Electron Ltd.) wurden nach den Angaben des Beispiels 1 der DE-OS 2 160 208 naß gemahlen und aufgearbeitet.
Die mit diesem Pigment nach A 1.1) und A 1.2) hergestellte Tiefdruckfarbe zeigt einen Abtrag von 0,1 μm.

b) Demgegenüber zeigte die mit dem in Abwesenheit von Zirkonoxid gemahlenen Vergleichspigment hergestellte Druckfarbe einen Abrieb von 1,3 μm.

c) Wurde dem nach b) gemahlenen Rohpigment vor der Aufarbeitung die gleiche Menge des unter a) genannten Zirkonoxids zugegeben, dann wurde ein praktisch nicht abrasiv wirkendes Pigment erhalten. Die mit diesem Pigment hergestellte Tiefdruckfarbe gab nach A2) einen Abtrag von 0,15 μm.

## Beispiel 23

100 Teile eines zur Herstellung von Tiefdruckfarben geeigneten Polychlorkupferphthalocyaninpigments (Cl 45,2%), das jedoch abrasiv ist, und 1,5 Teile Carbonyleisenpulver (enth. 0,8% N, 0,9% C; Teilchengröße ≈4 µm) werden trocken gemischt. Die nach A 1.1) und A 1.2) erhaltene Tiefdruckfarbe hat im Test nach A2) einen Abrieb von 0,2 µm. Die ohne den Zusatz von Carbonyleisenpulver hergestellte Druckfarbe weist einen Abrieb von 1,6 µm auf.

## Beispiel 24

23 Teile eines zur Herstellung von Tiefdruckfarben geeigneten Kupferphthalocyaninpigments, das jedoch abrasiv ist, und 0,69 Teile gemahlener Flint (Teilchengröße <50 µm) wurden nach A 1.1) und A 1.2) zu einer Tiefdruckfarbe verarbeitet. Die erhaltene Farbe zeigte bei der Prüfung nach A2) einen Abrieb von 0,2 µm. Die in Abwesenheit von Flint hergestellte Druckfarbe hatte einen Abrieb von 0,7 µm.

## Beispiel 25

a) Gemahlener Feldspat wurde in einer 50%igen Lösung eines Tiefdruckfarbenbindemittels so lange dispergiert, bis die Teilchengröße ≤20 µm betrug. Die Lagerstabilität der Paste wurde durch Zugeben von Bentonit verbessert.

b) Einem Kupferphthalocyaninpigment enthaltendem Konzentrat (hergestellt nach A 1.1), das nach A 1.2) eine Druckfarbe mit einem Abrieb von 0,7 µm lieferte, wurde so viel der nach a) hergestellten Paste zugegeben, bis die Menge Feldspat 2,5%, bezogen auf Pigment, betrug. Nach dem Verdünnen gemäß A 1.2) wurde eine Druckfarbe mit einem Abrieb von 0,3 µm erhalten (bestimmt nach A2)).

## Beispiel 26

Ein sehr stark abrasiv wirkendes Kupferphthalocyanin wurde mit den in der Tabelle II angegebenen Substanzen gemischt. Die Mischungen wurden nach A 1.1) und A 1.2) zu Tiefdruckfarben verarbeitet, deren Abrasion nach A2) bestimmt wurde. Der nach A2) bestimmte Abrieb ist in Spalte 5 der Tabelle angegeben.

Tabelle II

| | Zusatz | Härte | Menge | Max. Abrieb |
|---|---|---|---|---|
| | | | [%] | [µm] |
| a | O | — | — | 4 |
| b | ®Bentone 34 | 1 | 3,0 | 3,8 |
| c | Zirkonoxid (99% $ZrO_2$; monoklin; ®Tego BC 99S der Fa. Th. Goldschmidt) | 6,5 | 0,25 | 0,81 |
| d | Bentone 34 + Zirkonoxid | 1,0 6,5 | 3,0 0,25 | 0,08 |

## Beispiel 27

Ein für Tiefdruckfarben geeignetes β-Kupferphthalocyaninpigment, das sehr stark abrasiv ist, wurde mit der in der Tabelle III angegebenen Menge Zirkonoxid (99% $ZrO_2$; monoklin, Korngröße <53 µm; ® Tego BC 99S der Fa. Th. Goldschmidt AG) trocken gemischt.

Die so erhaltenen Mischungen wurden nach A 1.1) und A 1.2) zu Tiefdruckfarben verarbeitet und die Abrasion der Druckfarben nach A2) bestimmt.

Tabelle III

|  | a | b | c | d | e | f | g | h |
|---|---|---|---|---|---|---|---|---|
| Zirkonoxid-Menge[1]) [%] | 0 | 5 | 1 | 0,75 | 0,5 | 0,25 | 0,1 | 0,05 |
| Max. Abrieb [$\mu$m] | 4 | 0,05 | 0,15 | 0,45 | 0,63 | 0,81 | 1,06 | 1,42 |

[1]) bezogen auf Pigment.

## Beispiel 28

Einfluß der Teilchengröße der abrasionsvermindernden Zusätze

Ein Zirkonoxid (99% $ZrO_2$, monoklin, Teilchengröße 53 $\mu$m; ® Tego BC 99S der Fa. Th. Goldschmidt AG) wurde durch Sichtung in 3 Kornklassen getrennt:

| Zirkonoxid | Teilchengröße |
|---|---|
| a) | <5 $\mu$m |
| b) | 5 bis 20 $\mu$m |
| c) | 20 bis 53 $\mu$m |
| d) | <53 $\mu$m (zur Sichtung verwendetes Zirkonoxid) |

Ein $\beta$-Kupferphthalocyaninpigment, das stark abrasiv wirkt, wurde zusammen mit je 1,5%, bezogen auf Pigment, Zirkonoxid a), b) und c) und dem zur Sichtung verwendeten Zirkonoxid d) sowie ohne den Zusatz an Zirkonoxid nach A 1.1) und A 1.2) zu Tiefdruckfarben verarbeitet.

Bei der Abrasionsprüfung nach A2) wurden die in der Tabelle IV angegebenen Abriebwerte ermittelt.

Tabelle IV

$\beta$-Kupferphthalocyaninpigment

| Zusatz | Teilchen-größe | Menge[1]) | Max. Abrieb |
|---|---|---|---|
| | [$\mu$m] | [%] | [$\mu$m] |
| O | | | 2,4 |
| a) $ZrO_2$ | <5 | 1,5 | 0,03 |
| b) $ZrO_2$ | 5—50 | 1,5 | 0,1 |
| c) $ZrO_2$ | 20—53 | 1,5 | 0,15 |
| d) $ZrO_2$ | <53 | 1,5 | 0,3 |

[1]) bezogen auf Pigment.

## Beispiel 29

24 Teile eines Polychlorkupferphthalocyaninpigments, das coloristisch für den Verpackungstiefdruck geeignet ist, jedoch abrasiv ist, wurden mit 0,6 Teilen gemahlenem Bimsstein in 276 Teilen einer 30%igen Lösung eines Polyamidharzes in einem Gemisch aus n-Propanol und Benzin (Verhältnis 67 : 33 Teile) auf einer Vibrationsmühle mit 300 g Stahlkugeln 30 Min. dispergiert. Die erhaltene Farbe wurde mit dem gleichen Lösungsmittelgemisch auf eine Auslaufzeit von 28 sec (DIN-Becher mit 3 mm Düse) eingestellt und nach A2) auf Abrasion geprüft.

**0 054 684**

In einer Parallelprobe wurde das gleiche Pigment jedoch ohne den Zusatz an Bimsstein zu einer Druckfarbe verarbeitet.

Abrieb der Tiefdruckfarbe ohne Zusatz: 1,44 μm
Abrieb der Tiefdruckfarbe mit Zusatz: 0,10 μm.

### Beispiel 30

25 Teile einer Nitrocellulose enthaltenden Zubereitung von $\beta$-Kupferphthalocyanin, das schwach abrasiv ist (Pigmentgehalt: 50%), wurden in 75 Teilen einer Mischung aus Ethanol/Ethylenglykolmonoethyläther (Verh. 9 : 1 Teile) zusammen mit 0,5 Teilen ($\hat{=}$ 4%, bezogen auf Pigment) fein gemahlenem Feldspat (Teilchengröße <53 μm) eingerührt. Dieses Konzentrat wird dann mit einer 25%igen Lösung von Nitrocellulose in dem oben angegebenen Lösungsmittelgemisch im Verhältnis 1 : 2 Teilen verdünnt. Die Farbe wurde durch Zugeben von Lösungsmittelgemisch auf 28 sec (DIN-Becher, 3 mm Düse) eingestellt. Die Abrasion wurde nach A2) bestimmt.

Verpackungstiefdruckfarbe ohne Zusatz: 0,36 μm Abrasion
Verpackungstiefdruckfarbe mit Zusatz: 0,10 μm Abrasion

### Beispiel 31

a) 25 Teile einer Präparation von Eisenoxid-hydrat (FeOOH) in einem Vinylchlorid-Vinylacetat-Copolymeren, die 1 Gew.-% (bezogen auf Pigment) aus Eisenpentacarbonyl hergestelltes Eisenpulver (Mohs'sche Härte 7; Teilchengröße $\approx$4 μm) enthielt, wurden in 175 Teile einer 12%igen Lösung des obengenannten Copolymeren in Ethylacetat-Methylethylketon (1 : 1 Teile) eingetragen und 30 Min. mit einem Schnellrührer gerührt. Das Konzentrat wurde dann mit der gleichen Lösung des Copolymeren im Verhältnis 1 : 1 Teilen aufgelackt und die Farbe auf 28 sec Auslaufzeit (DIN-Becher, 3 mm Düse) eingestellt.
b) Zum Vergleich wurde eine Farbe aus einer Zubereitung hergestellt, die kein Eisenpulver enthielt.

Prüfung der Farben nach A2):
Verpackungstiefdruckfarbe ohne Zusatz: 0,5 μm Abrieb
Verpackungstiefdruckfarbe mit Zusatz: 0,15 μm Abrieb

Das gleiche Ergebnis wie mit der nach a) erhaltenen Farbe wurde erzielt, wenn in die nach b) hergestellte Farbe oder Konzentrat 1 Gew.-%, bezogen auf Pigment, des unter a) angegebenen Eisenpulvers eingerührt wurde.
Abrieb: 0,20 μm.

### Beispiel 32

Zu 100 Teilen einer Konzentratpaste (enthielt 15 Teile C. J. Pigment Red 57:1 C. J. Nr. 15850:1 in 85 Teilen einer 10%igen Lösung eines mit Kolophonium modifizierten Phenolharzes in Toluol), die durch 10stündiges Mahlen in einer Rührwerkskugelmühle abrasiv geworden war, wurden 0,45 Teile Zirkonoxid (92% $ZrO_2$; 0,6% $SiO_2$, kubisch, Teilchengröße 3 μm; ® Zircoa B der Corning Glass Works) gegeben und dispergiert.
Das Konzentrat wurde mit der gleichen Menge einer 50%igen Lösung des gleichen Harzes in Toluol aufgelackt und die Farbe nach A2) geprüft.
Zum Vergleich wurde eine Farbe ohne den Zusatz von Zirkonoxid geprüft.

Abrieb   ohne Zusatz: 0,7 μm
         mit Zusatz: 0,2 μm.

Das gleiche Ergebnis wurde erhalten, wenn der Suspension aus Pigment und Bindemittellösung vor dem Mahlen 3%, bezogen auf Pigment, des gleichen Zirkonoxids zugegeben wurde.

### Beispiel 33

Zu 100 Teilen einer Konzentratpaste (enthielt 15 Teile Pigment Yellow 12; C. J. No. 21090) in 85 Teilen einer 10%igen Lösung eines kolophonium-modifizierten Phenolharzes in Toluol), die durch 10stündiges Mahlen in einer Rührwerkskugelmühle abrasiv geworden war, wurden — bezogen auf

9

**0 054 684**

Pigment — 3% fein gemahlener Steatit (Teilchengröße <5 µm) in Form einer Suspension in einer 50%igen Lösung des obengenannten Harzes in Toluol zugegeben und homogen verteilt.

Die Paste wurde aufgelackt, auf die für Tiefdruckfarben erforderliche Viskosität eingestellt und nach A2) geprüft. Zum Vergleich wurde eine Tiefdruckfarbe ohne den Zusatz von Steatit hergestellt.

Abrieb  ohne Zusatz: 0,6 µm
mit Zusatz: 0,2 µm

### Beispiel 34

a)  108 Teile eines für Dekortiefdruckfarben geeigneten $\beta$-Kupferphthalocyaninpigments, das leicht abrasiv ist, und 2,2 Teile Zirkonoxid (99% $ZrO_2$, monoklin, Teilchengröße <20 µm; $ZrO_2$ S Grade der Fa. Magnesium Electron Ltd.) wurden in einer Lösung von 62,5 Teilen Casein in 187,5 Teilen eines Wasser-Alkohol-Gemisches (2:1 Teile) auf einer Vibrationsmühle dispergiert und das Konzentrat mit der angegebenen Caseinlösung auf 28 sec Auslaufzeit (DIN-Becher, 3 mm Düse) eingestellt.

b)  Zum Vergleich wurde aus dem gleichen Pigment eine Druckfarbe ohne den Zusatz von Zirkonoxid hergestellt.
Die Farben wurden nach A2) geprüft.

Abrieb  ohne Zusatz: 0,5 µm
mit Zusatz: 0,2 µm.

### Beispiel 35

a)  Ein im Handel erhältliches $\beta$-Kupferphthalocyaninpigment, das stark abrasiv ist, und 3% Zirkonoxid (90% $ZrO_2$; ≈9% $SiO_2$; monoklin, Teilchengröße <20 µm, ® Zedox HC der Firma Anzon Ltd.) werden trocken homogen gemischt.
Mit dem so erhaltenen Pigment wurde nach A 1.1) und A 1.2) eine Tiefdruckfarbe hergestellt.

b)  Zum Vergleich wurde aus dem verwendeten Pigment ohne den Zusatz von Zirkonoxid eine Tiefdruckfarbe hergestellt. Beide Tiefdruckfarben wurden nach A2) auf Abrasion geprüft.

Abrieb  b) ohne Zusatz: 2,1 µm
a) mit Zusatz: 0,2 µm.

Das gleiche Ergebnis wie bei a) wurde erzielt, wenn in die nach b) hergestellte Tiefdruckfarbe — bezogen auf Pigment — 3% des bei a) verwendeten Zirkonoxids eingearbeitet wurde.

### Beispiel 36

Einer im Handel erhältlichen schwarzen Tiefdruckfarbe, die Ruß als Farbpigment (Größe der Primärteilchen ≈0,1 µm) enthält und die eine mittlere Abrasion verursacht, wurden — berechnet auf den Feststoffgehalt — 1,5% des im Beispiel 28 angegebenen Zirkonoxids Fraktion a) (Teilchengröße <5 µm) in Form einer 10%igen Suspension in einer 50%igen Harzlösung in Toluol zugegeben. Nach dem Mischen wurde die Abrasion nach A2) bestimmt.

schwarze Tiefdruckfarbe ohne Zusatz: 0,6 µm Abrieb
schwarze Tiefdruckfarbe mit Zusatz: 0,1 µm Abrieb.

**Patentansprüche**

1. Verfahren zur Verringerung der Abrasion durch Pigmente und Druckfarben, dadurch gekennzeichnet, daß man den Pigmenten oder Druckfarben in Druckfarben unlösliche Substanzen mit einer Mohs'schen Härte von 4,5 bis 8 und einer Teilchengröße von unterhalb 55 µm zusetzt.

2. Verfahren gemäß Anspruch 1, dadurch gekennzeichnet, daß man als Substanzen mit einer Mohs'schen Härte von 4,5 bis 8, Eisenpulver, Verbindungen des Eisens, des Zirkons, des Siliciums, des Magnesiums, Silikate des Aluminiums, Oxide des Mangans, des Zinns, des Cers oder Gemische davon verwendet.

3. Verfahren gemäß Anspruch 1, dadurch gekennzeichnet, daß man als Substanzen mit einer Mohs'schen Härte von 4,5 bis 8 Eisenoxid, Carbonyleisenpulver, Zirkonsilikate, Zirkonoxide, Siliciumdioxid, Bimsstein, Feldspat, Steatit, Flint oder Gemische davon verwendet.

10

**0 054 684**

4. Verfahren nach Anspruch 1, dadurch gekennzeichnet, daß man als Substanzen mit einer Mohs'schen Härte von 4,5 bis 8 Zirkonoxid verwendet.

5. Pigmente enthaltend zur Verringerung der Abrasion in Druckfarben unlösliche feinteilige Substanzen mit einer Mohs'schen Härte von 4,5 bis 8.

6. Pigmente gemäß Anspruch 5, enthaltend Eisenpulver, Verbindungen des Eisens, des Zirkons, des Siliciums, des Magnesiums, Silikate des Aluminiums, Oxide des Mangans, des Zinns, des Cers oder Gemische davon als Substanzen mit einer Mohs'schen Härte von 4,5 bis 8.

7. Pigmente gemäß Anspruch 5, enthaltend Eisenoxid, Carbonyleisenpulver, Zirkonsilikate, Zirkonoxide, Siliciumdioxid, Bimsstein, Feldspat, Steatit, Flint oder Gemische davon als Substanzen mit einer Mohs'schen Härte von 4,5 bis 8.

8. Pigmente und Druckfarben, enthaltend zur Verringerung der Abrasion in Druckfarben unlösliche Verbindungen des Zirkons, Bimsstein, Feldspat oder Carbonyleisenpulver mit einer Mohs'schen Härte von 4,5 bis 8.

9. Pigmente gemäß den Ansprüchen 5 bis 8, dadurch gekennzeichnet, daß diese 0,01 bis 10 Gew.-%, bezogen auf Pigment, der in Druckfarben unlöslichen Substanzen mit einer Mohs'schen Härte von 4,5 bis 8 enthalten.

10. Druckfarben gemäß Anspruch 8, dadurch gekennzeichnet, daß diese 0,01 bis 10 Gew.-%, bezogen auf Pigment, der in Druckfarben unlöslichen Verbindungen enthalten.

## Claims

1. A process for reducing the abrasion caused by pigments and printing inks, wherein a substance which is insoluble in printing inks and has a Mohs hardness of from 4.5 to 8 and a particle size of less than 55 μm is added to the pigments or printing inks.

2. A process as claimed in claim 1, wherein iron powder, a compound of iron, zirconium, silicon or magnesium, an aluminum silicate, an oxide of manganese, tin or cerium, or a mixture thereof is used as the substance which has a Mohs hardness of from 4.5 to 8.

3. A process as claimed in claim 1, wherein iron oxide, carbonyl iron powder, zirconium silicate, zirconium oxide, silicon dioxide, pumice, feldspar, steatite, flint, or a mixture thereof is used as the substance which ahs a Mohs hardness of from 4.5 to 8.

4. A process as claimed in claim 1, wherein zirconium oxide is used as the substance which has a Mohs hardness of from 4.5 to 8.

5. A pigment which contains a particulate substance which is insoluble in printing inks and has a Mohs hardness of from 4.5 to 8, in order to reduce the abrasion caused thereby.

6. A pigment as claimed in claim 5, which contains iron powder, a compound of iron, zirconium, silicon or magnesium, an aluminum silicate, an oxide of manganese, tin or cerium, or a mixture thereof as the substance which has a Mohs hardness of from 4.5 to 8.

7. A pigment as claimed in claim 5, which contains iron oxide, carbonyl iron powder, zirconium silicate, zirconium oxide, silicon dioxide, pumice, feldspar, steatite, flint, or a mixture thereof as the substance which has a Mohs hardness of from 4.5 to 8.

8. A pigment or printing ink which contains a zirconium compound, pumice, feldspar or carbonyl iron powder which is insoluble in printing inks and has a Mohs hardness of from 4.5 to 8, in order to reduce the abrasion caused thereby.

9. A pigment as claimed in claims 5 to 8, which contains from 0.01 to 10% by weight of a substance which is insoluble in printing inks and has a Mohs hardness of from 4.5 to 8.

10. A printing ink as claimed in claim 8, which contains from 0.01 to 10% by weight, based on pigment, of the substance which is insoluble in printing inks.

## Revendications

1. Procédé pour diminuer l'abrasion provoquée par les pigments et encres d'impression, caractérisé en ce que l'on ajoute aux pigments ou encres d'impression des substances insolubles dans les encres d'impression et présentant une dureté Mohs de 4,5 à 8 et une dimension de particule inférieure à 55 microns.

2. Procédé selon la revendication 1, caractérisé en ce que l'on utilise en tant que substances présentant une dureté Mohs de 4,5 à 8 des poudres de fer, des composés du fer, du zirconium, du silicium ou du magnésium, des silicates d'aluminium, des oxydes du manganèse, de l'étain ou du cérium, ou leurs mélanges.

3. Procédé selon la revendication 1, caractérisé en ce que l'on utilise en tant que substances présentant une dureté Mohs de 4,5 à 8 de l'oxyde de fer, de la poudre de fer-carbonyle, des silicates de zirconium, des oxydes de zirconium, de la silice, de la pierre ponce, du feldspath, de la stéatite, du flint ou leurs mélanges.

4. Procédé selon la revendication 1, caractérisé en ce que l'on utilise en tant que substance

11

présentant une dureté Mohs de 4,5 à 8, un oxyde de zirconium.

5. Pigments contenant, pour diminuer l'abrasion, des substances en fines particules insolubles dans les encres d'impression et présentant une dureté Mohs de 4,5 à 8.

6. Pigments selon la revendication 5, contenant de la poudre de fer, des composés du fer, du zirconium, du silicium ou du magnésium, des silicates d'aluminium, des oxydes de manganèse, de l'étain ou du cérium ou leurs mélanges en tant que substances ayant une dureté Mohs de 4,5 à 8.

7. Pigments selon la revendication 5, contenant de l'oxyde de fer, de la poudre de fer-carbonyle, des silicates du zirconium, des oxydes du zirconium, de la silice, de la pierre ponce, du feldspath, de la stéatite, du flint ou leurs mélanges en tant que substances ayant une dureté Mohs de 4,5 à 8.

8. Pigments et encres d'impression contenant, pour diminuer l'abrasion, des composés du zirconium insolubles dans les encres d'impression, de la pierre ponce, du feldspath ou de la poudre de fer-carbonyle à une dureté Mohs de 4,5 à 8.

9. Pigments selon les revendications 5 à 8, caractérisés en ce qu'ils contiennent de 0,01 à 10% de leur poids, des substances insolubles dans les encres d'impression et présentant une dureté Mohs de 4,5 à 8.

10. Encres d'impression selon la revendication 8, caractérisées en ce qu'elles contiennent de 0,01 à 10% en poids, par rapport au pigment, des composés insolubles dans les encres d'impression.